# EUROPEAN PATENT APPLICATION

(11) **EP 4 815 547 A1**
(43) Date of publication of application: **30.09.2026**
(21) Application number: 24895750.8
(22) Date of filing: 13.08.2024
(51) Int. Cl.: H04W 24/08

(54) **INFORMATION TRANSMISSION METHODS, DEVICES AND STORAGE MEDIUM**

(30) Priority: 30.11.2023 CN 202311637574
(71) Applicant: ZTE CORPORATION, Shenzhen, Guangdong 518057 (CN)
(72) Inventor: CHEN, Yijian, Shenzhen, Guangdong 518057 (CN); YANG, Jun, Shenzhen, Guangdong 518057 (CN); ZHANG, Shujuan, Shenzhen, Guangdong 518057 (CN); SI, Yuan, Shenzhen, Guangdong 518057 (CN); YU, Hongkang, Shenzhen, Guangdong 518057 (CN); JIAN, Mengnan, Shenzhen, Guangdong 518057 (CN)
(74) Representative: Aipex B.V.
(86) International application number: PCT/CN2024/111622
(87) International publication number: WO 2025/112647

(57) **Abstract**

Provided are an information transmission method, a device, and a storage medium. The information transmission method applied to a first communication device includes performing channel measurement based on a received reference signal to obtain a first channel measurement result; transforming the first channel measurement result according to a preprocessing manner to obtain a second channel measurement result; quantizing and feeding back channel information according to the second channel measurement result; and sending channel quantization feedback indication information to a second communication device.

## Description

### Cross-Reference

The present invention claims priority to Chinese Patent Application No. 202311637574.5, titled "INFORMATION TRANSMISSION METHODS, DEVICES AND STORAGE MEDIUM", filed with the China National Intellectual Property Administration (CNIPA) on Nov. 30, 2023, the disclosure of which is incorporated herein by reference in its entirety.

### TECHNICAL FIELD

The present application relates to the field of communication technologies, specifically a data transmission method, a device, and a storage medium.

### BACKGROUND

In wireless communications, with the increasing enrichment of reference signal transmission strategies at a transmitting end and feedback strategies at a receiving end, a one-to-one mapping between the reference signal transmission strategies and the feedback strategies in existing systems becomes increasingly inflexible. If different terminals adopt different feedback strategies according to their respective requirements, multiple types of reference signals need to be transmitted, resulting in waste of reference signal overhead, restricting the overall system efficiency, and becoming a bottleneck problem in future multi-antenna communications.

### SUMMARY

In view of this, embodiments of the present application provide an information transmission method, a device, and a storage medium, effectively reducing the signal transmission overhead and improving the transmission efficiency of a wireless communication system.

Embodiments of the present application provide an information transmission method applied to a first communication device. The information transmission method applied to the first communication device includes performing channel measurement based on a received reference signal to obtain a first channel measurement result; transforming the first channel measurement result according to a preprocessing manner to obtain a second channel measurement result; quantizing and feeding back channel information according to the second channel measurement result; and sending channel quantization feedback indication information to a second communication device.

Embodiments of the present application provide an information transmission method applied to a second communication device. The information transmission method applied to the second communication device includes sending a reference signal to a first communication device to enable the first communication device to perform channel measurement based on the reference signal to obtain a first channel measurement result; and configuring a set of preprocessing manners corresponding to the first channel measurement result to enable the first communication device to transform the first channel measurement result according to a preprocessing manner in the set of preprocessing manners to obtain a second channel measurement result and quantize and feed back channel information according to the second channel measurement result.

Embodiments of the present application provide an information transmission apparatus applied to a first communication device. The information transmission apparatus applied to the first communication device includes a measurement module configured to perform channel measurement based on a received reference signal to obtain a first channel measurement result; a transformation module configured to transform the first channel measurement result according to a preprocessing manner to obtain a second channel measurement result; a quantization feedback module configured to quantize and feed back channel information according to the second channel measurement result; and a sending module configured to send channel quantization feedback indication information to a second communication device.

Embodiments of the present application provide an information transmission apparatus applied to a second communication device. The information transmission apparatus applied to the second communication device includes a sending module configured to send a reference signal to a first communication device to enable the first communication device to perform channel measurement based on the reference signal to obtain a first channel measurement result; and a configuration module configured to configure a set of preprocessing manners corresponding to the first channel measurement result to enable the first communication device to transform the first channel measurement result according to a preprocessing manner in the set of preprocessing manners to obtain a second channel measurement result and quantize and feed back channel information according to the second channel measurement result.

Embodiments of the present application provide a communication device. The communication device includes a memory and at least one processor. The memory is configured to store at least one program. When executed by the at least one processor, the at least one program causes the at least one processor to perform the information transmission method of any previous embodiment.

Embodiments of the present application provide a storage medium storing a computer program which, when executed by a processor, causes the processor to perform the method of any previous embodiment.

### BRIEF DESCRIPTION OF DRAWINGS

FIG. 1 is a diagram illustrating an implementation of a reference signal transmission strategy and a corresponding feedback strategy according to the related art.
FIG. 2 is a diagram illustrating an extended implementation of a reference signal transmission strategy and a corresponding feedback strategy according to the related art.
FIG. 3 is a flowchart of an information transmission method according to embodiments of the present application.
FIG. 4 is a flowchart of an information transmission method according to embodiments of the present application.
FIG. 5 is a diagram illustrating an implementation of transforming a first channel measurement result according to embodiments of the present application.
FIG. 6 is a flowchart of an information transmission method according to embodiments of the present application.
FIG. 7 is a diagram illustrating results of a Fourier transform and a fractional Fourier transform of a non-stationary signal according to embodiments of the present application.
FIG. 8 is a diagram illustrating preprocessing based on a discrete fractional Fourier transform according to embodiments of the present application.
FIG. 9 is a block diagram of an information transmission apparatus according to embodiments of the present application.
FIG. 10 is a block diagram of an information transmission apparatus according to embodiments of the present application.
FIG. 11 is a diagram illustrating the structure of a communication device according to embodiments of the present application.

### DETAILED DESCRIPTION

Embodiments of the present application are described hereinafter in conjunction with the drawings. The present application is described below in conjunction with embodiments and the drawings. The embodiments described below are intended to explain the present application and not to limit the scope of the present application.

At the physical layer, 5G defines some related entities for spatial domain resources, such as antenna ports, resources, resource sets, beams, transceiver nodes, and antenna panels, which have different levels of abstraction. On this basis, some reference signal transmission strategies are implicitly defined, and corresponding channel information measurement and feedback strategies are specified. In practical applications, the 5G protocol does not limit how entities transmit measurement reference signals, thereby providing flexibility for network-side implementation.

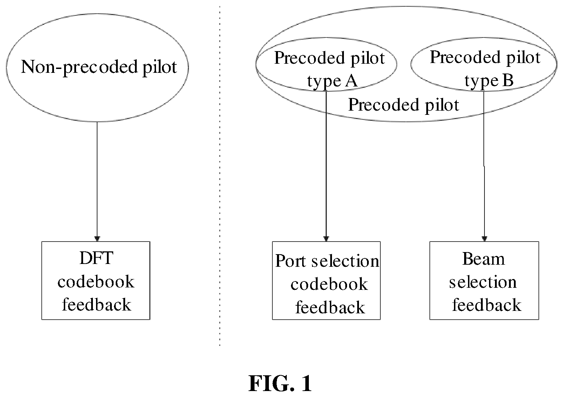

FIG. 1 is a diagram illustrating an implementation of a reference signal transmission strategy and a corresponding feedback strategy according to the related art. As shown in FIG. 1, existing measurement reference signals are divided into two categories: precoded measurement reference signals and non-precoded measurement reference signals. The non-precoded measurement reference signals generally refer to that each port of a reference signal is mapped to one antenna element entity, and antenna element entities corresponding to different ports are different. The precoded measurement reference signals refer to that each port of a reference signal is mapped to multiple antenna entities, and antenna element entities corresponding to different ports may be the same, but use different precoding.

A mapping relationship between a non-precoded measurement reference signal port set P_{A} and antenna elements S may be understood as an identity matrix I, that is, P_{A} = I*S, while a mapping relationship between a precoded measurement reference signal P_{B} and the antenna elements is a non-identity matrix D, that is, P_{B} = D*S. Various types of mapping relationships may be selected, corresponding to different matrices D, and thus there are many types of precoded measurement reference signals. At present, a commonly used assumption in 5G is that, in a same polarization direction, the precoded measurement reference signal is precoded using vectors in a discrete Fourier transform (DFT) matrix. The matrix D is a precoding matrix formed by a subset of vectors of the DFT matrix.

For the non-precoded measurement reference signals, the related art adopts a matched DFT codebook for feedback. In 5G NR, a Type I codebook and a Type II codebook are defined, corresponding to CSI feedback with different precisions. For the precoded measurement reference signals, they are further divided into two subtypes. One subtype adopts port selection codebook feedback, and the other subtype adopts beam selection, and feeds back a beam index. It can be seen that the most obvious problem in the related art is that "the reference signal transmission strategy and the feedback method are strongly bound to each other".

With the evolution of technology, the types of precoded reference signals may become increasingly diverse. Precoding is not limited to DFT vectors, nor limited to constant modulus forms. Communication systems are expected to flexibly support more forms of precoding, such as basis vectors corresponding to a fractional Fourier transform (FRFT).

Beam training is also not limited to the simplest manner of directly selecting from multiple beams. Some beam training methods based on compressed sensing expect that the selected beam is not any measured reference signal, but some beams defined on other precoding. For example, defined beams are B1, B2, ..., BN, however, the measurement reference signals are transmitted by using combinations of multiple beams rather than using an individual beam. In this case, it is impossible to directly select an optimal beam from B1, B2, ..., BN based on measurement results.

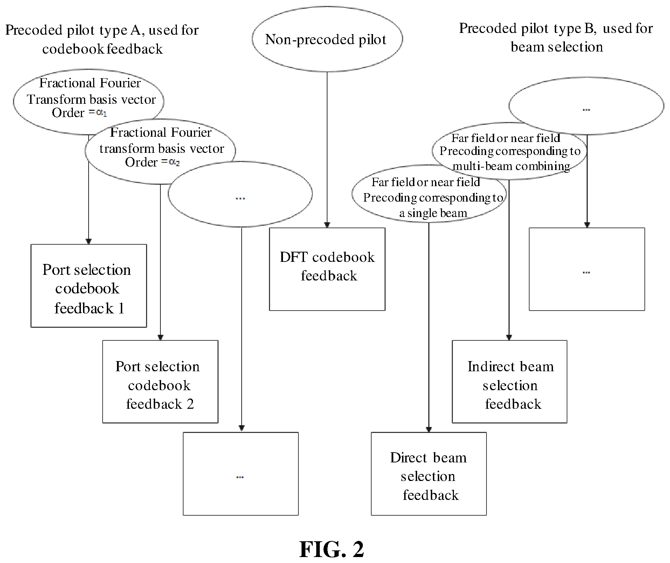

FIG. 2 is a diagram illustrating an extended implementation of a reference signal transmission strategy and a corresponding feedback strategy according to the related art. As shown in FIG. 2, it can be seen that, as the reference signal transmission strategies at the transmitting end and the feedback strategies at the receiving end become increasingly rich, the one-to-one mapping between the reference signal transmission strategies and the feedback strategies in existing systems becomes increasingly inflexible. If different terminals adopt different feedback strategies according to their own requirements, multiple types of reference signals have to be transmitted, resulting in waste of reference signal overhead, restricting the overall system efficiency, and becoming a bottleneck problem in future multi-antenna communications.

In view of this, embodiments of the present application provide an information transmission method, in which a preprocessing manner is used to transform a channel measurement result such that the channel measurement result is adapted to an optimal feedback strategy. Therefore, it is not necessary for a network as a transmitting end to transmit multiple types of reference signals, thereby avoiding waste of reference signal overhead and avoiding a strongly bound mapping relationship between a reference signal transmission strategy and a feedback strategy, and further improving overall system efficiency.

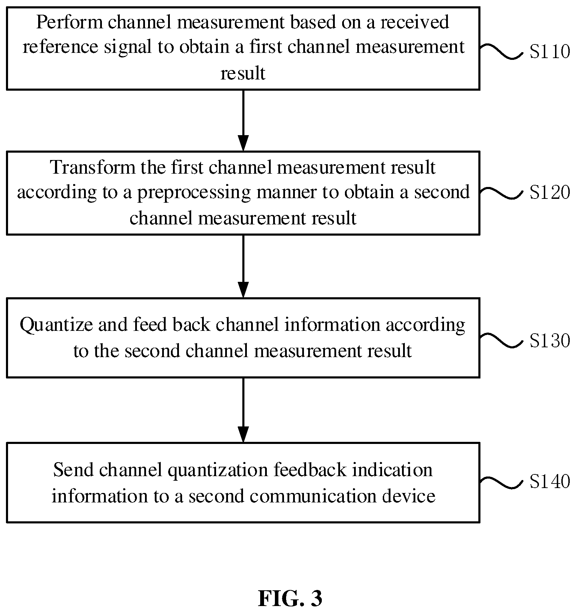

FIG. 3 is a flowchart of an information transmission method according to embodiments of the present application. This embodiment is applied to a scenario in which a reference signal transmission strategy and an information feedback strategy are difficult to be jointly designed. This embodiment may be implemented by a first communication device. By way of example, the first communication device may be a terminal, and the terminal may serve as a receiving end of a reference signal; correspondingly, a second communication device may be a network, and the network may serve as a transmitting end of the reference signal. As shown in FIG. 3, this embodiment includes steps S110 to S140.

In S110, channel measurement is performed based on a received reference signal to obtain a first channel measurement result.

The reference signal may also be referred to as a pilot signal, which is a known signal provided by a network serving as a transmitting end to a terminal serving as a receiving end for channel estimation or channel sounding. In an embodiment, the second communication device serving as the transmitting end sends the reference signal to the first communication device serving as the receiving end to enable the first communication device to perform channel measurement based on the reference signal to obtain the first channel measurement result corresponding to the channel.

In S120, the first channel measurement result is transformed according to a preprocessing manner to obtain a second channel measurement result.

In an embodiment, the first communication device performs transformation processing on the first channel measurement result using the preprocessing manner so that the second channel measurement result obtained through the transformation processing can be adapted to an optimal feedback strategy. In an embodiment, the preprocessing manner may be obtained through negotiation between the first communication device and the second communication device, may be configured by the second communication device via signaling, or may be selected by the first communication device.

In S130, channel information is quantized and fed back according to the second channel measurement result.

In S140, channel quantization feedback indication information is sent to a second communication device.

After the first communication device determines a quantization manner and a feedback manner of channel information adopted by the first communication device, the first communication device sends channel quantization feedback indication information to the second communication device to indicate the quantization manner and the feedback manner of the channel information adopted by the first communication device.

In an embodiment, the reference signal at least includes one of a channel state information reference signal or a synchronization signal.

In an embodiment, transforming the first channel measurement result according to the preprocessing manner includes receiving at least one preprocessing manner configured by the second communication device and transforming the first channel measurement result according to the at least one preprocessing manner. A set of preprocessing manners may be determined through negotiation between the second communication device serving as the transmitting end and the first communication device serving as the receiving end, and the second communication device selects at least one preprocessing manner from the set of preprocessing manners and configures the at least one preprocessing manner to the first communication device so that the first communication device can use the at least one preprocessing manner to transform the first channel measurement result to obtain corresponding second channel measurement results.

In an embodiment, transforming the first channel measurement result according to the preprocessing manner includes receiving a set of preprocessing manners configured by the second communication device or agreeing on a set of preprocessing manners with the second communication device; and selecting at least one preprocessing manner from the set of preprocessing manners and transforming the first channel measurement result according to the at least one preprocessing manner. The first communication device serving as the receiving end may try each preprocessing manner in the set of preprocessing manners and select an optimal preprocessing manner to transform the first channel measurement result to obtain a corresponding second channel measurement result.

In an embodiment, the information transmission method applied to the first communication device also includes feeding back preprocessing manner indication information to the second communication device, where the preprocessing manner indication information indicates at least one preprocessing manner selected by the first communication device from the set of preprocessing manners. In the case where the first communication device selects an optimal preprocessing manner, the first communication device may send preprocessing manner indication information to the second communication device so that the second communication device is informed of the preprocessing manner selected by the first communication device through the preprocessing manner indication information.

In an embodiment, transforming the first channel measurement result according to the preprocessing manner includes inputting the first channel measurement result into a preprocessing function for transformation. In an example, the preprocessing manner is to input the first channel measurement result into a preprocessing function for transformation processing. The process in which the first communication device performs transformation processing on the first channel measurement result using the preprocessing manner may be understood as a process in which the first communication device inputs the first channel measurement result into the preprocessing function for transformation.

In an embodiment, inputting the first channel measurement result into the preprocessing function for transformation includes transforming the first channel measurement result using at least two preprocessing functions separately. The first communication device may use multiple preprocessing functions to transform the first channel measurement result separately to obtain multiple corresponding second channel measurement results, that is, the number of second channel measurement results is equal to the number of preprocessing functions adopted by the first communication device. The first communication device performs quantization and feedback of channel information based on the obtained second channel measurement results so that the second communication device can learn transformation accuracy of different preprocessing functions through different second channel measurement results.

In an embodiment, inputting the first channel measurement result into the preprocessing function for transformation includes transforming the first channel measurement result using at least two preprocessing functions sequentially, where the sequential transformation includes using a transformation result of the previous preprocessing function of the at least two preprocessing functions on the first channel measurement result as an input of the subsequent preprocessing function of the at least two preprocessing functions. The first communication device may sequentially use multiple preprocessing functions to transform the first channel measurement result, that is, the first communication device uses one preprocessing function to perform transformation processing on the first channel measurement result and uses a result of the transformation processing as an input to a subsequent preprocessing function, and so on until the transformation processing of the first channel measurement result using the preprocessing functions is completed, thereby obtaining a corresponding second channel measurement result.

In an embodiment, inputting the first channel measurement result into the preprocessing function for transformation includes transforming the first channel measurement result using at least one linear processing function and at least one nonlinear processing function.

In an embodiment, inputting the first channel measurement result into the preprocessing function for transformation includes selecting at least one preprocessing function from a set of preprocessing functions and transforming the first channel measurement result according to the at least one preprocessing function. The first communication device may select one or more preprocessing functions from a set of preprocessing functions and perform transformation processing on the first channel measurement result, thereby obtaining corresponding second channel measurement results.

In an embodiment, the information transmission method applied to the first communication device also includes feeding back preprocessing function indication information to the second communication device, where the preprocessing function indication information indicates at least one preprocessing function selected by the first communication device from the set of preprocessing functions. In the case where the first communication device selects one or more preprocessing functions from a set of preprocessing functions, the first communication device feeds back preprocessing function indication information to the second communication device so that the second communication device is informed of the at least one preprocessing function selected by the first communication device from the set of preprocessing functions.

In an embodiment, the preprocessing function indication information also indicates an order of a discrete fractional Fourier transform.

In an embodiment, transforming the first channel measurement result according to the preprocessing manner includes performing linear transformation on the first channel measurement result using a transform matrix from a set of transform matrices, where the transform matrix is configured for transformation of one set of complete orthogonal bases into another set of complete orthogonal bases.

In an embodiment, the transform matrix at least includes one of a discrete Fourier transform matrix or a discrete fractional Fourier transform matrix.

In an embodiment, the configuration mode of the set of transform matrices includes one of negotiation between the first communication device and the second communication device; or configuration by the second communication device. In an example, the set of transform matrices may be predetermined through negotiation between the first communication device and the second communication device; alternatively, the set of transform matrices may be configured by the second communication device and transmitted to the first communication device via signaling.

In an embodiment, the channel information at least includes one of the following: precoding information; beam selection information; information of a number of layers or rank; measurement reference signal selection information; beam quality information; or measurement reference signal resource or port selection information.

In an embodiment, the information transmission method applied to the first communication device also includes receiving manner configuration signaling sent by the second communication device and jointly determining the preprocessing manner, a quantization manner of the channel information, and a feedback manner of the channel information according to the manner configuration signaling. The first communication device may jointly determine the preprocessing manner, the quantization manner of the channel information, and the feedback manner of the channel information according to the manner configuration signaling. In an example, the second communication device may establish a mapping relationship between the preprocessing manner and the quantization manner and the feedback manner of the channel information and send the mapping relationship between the preprocessing manner and the quantization manner and the feedback manner of the channel information to the first communication device via mode configuration signaling. The first communication device may determine the quantization manner and the feedback manner of the channel information according to the preprocessing manner and the mapping relationship.

In an embodiment, the preprocessing manner in the set of preprocessing manners includes a unitary transform processing manner.

In an embodiment, a transformation type for transforming the first channel measurement result at least includes one of the following: a discrete Fourier transform; an inverse discrete Fourier transform; a discrete fractional Fourier transform; an inverse discrete fractional Fourier transform; linear weighted combining processing; or nonlinear modulo processing.

In an embodiment, the preprocessing manner in the set of preprocessing manners includes linear weighted combining processing; or nonlinear modulo processing.

In an embodiment, a transformation type for transforming the first channel measurement result at least includes one of the following: a wavelet transform; a Wigner transform; a Hilbert transform; a Laplace transform; a symplectic finite Fourier transform; or an inverse symplectic finite Fourier transform.

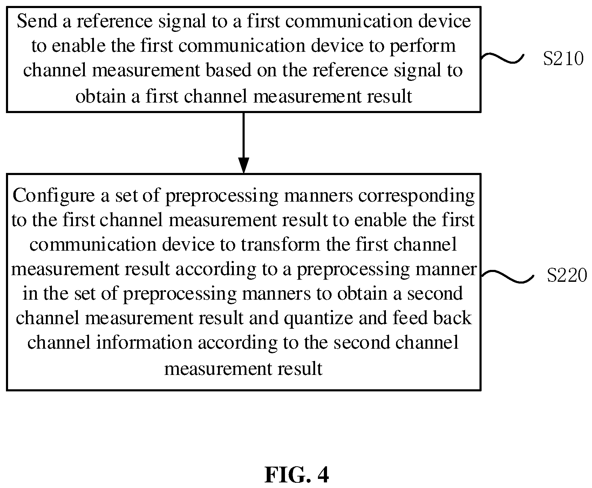

FIG. 4 is a flowchart of an information transmission method according to embodiments of the present application. This embodiment is applied to a scenario in which a reference signal transmission strategy and an information feedback strategy are difficult to be jointly designed. This embodiment may be implemented by a second communication device. By way of example, the second communication device may be a network, and the network may serve as a transmitting end of a reference signal; correspondingly, a first communication device may be a terminal, and the terminal may serve as a receiving end of the reference signal.

As shown in FIG. 4, this embodiment includes steps S210 and S220.

In S210, a reference signal is sent to a first communication device to enable the first communication device to perform channel measurement based on the reference signal to obtain a first channel measurement result.

In S220, a set of preprocessing manners corresponding to the first channel measurement result is configured to enable the first communication device to transform the first channel measurement result according to a preprocessing manner in the set of preprocessing manners to obtain a second channel measurement result and quantize and feed back channel information according to the second channel measurement result.

In an embodiment, the reference signal at least includes one of a channel state information reference signal or a synchronization signal.

In an embodiment, the information transmission method applied to the second communication device also includes sending a set of preprocessing manners to the first communication device to enable the first communication device to select at least one preprocessing manner from the set of preprocessing manners and transform the first channel measurement result according to the at least one preprocessing manner.

In an embodiment, the information transmission method applied to the second communication device also includes receiving preprocessing manner indication information fed back by the first communication device, where the preprocessing manner indication information indicates at least one preprocessing manner selected by the first communication device from the set of preprocessing manners.

In an embodiment, the preprocessing manner in the set of preprocessing manners includes a unitary transform processing manner.

In an embodiment, a transformation type for transforming the first channel measurement result at least includes one of the following: a discrete Fourier transform; an inverse discrete Fourier transform; a discrete fractional Fourier transform; an inverse discrete fractional Fourier transform; linear weighted combining processing; or nonlinear modulo processing.

In an embodiment, the preprocessing manner in the set of preprocessing manners includes linear weighted combining processing, and nonlinear modulo processing.

In an embodiment, a transformation type for transforming the first channel measurement result at least includes one of the following: a wavelet transform; a Wigner transform; a Hilbert transform; a Laplace transform; a symplectic finite Fourier transform; or an inverse symplectic finite Fourier transform.

In an embodiment, transforming the first channel measurement result according to the preprocessing manner includes performing linear transformation on the first channel measurement result using a transform matrix from a set of transform matrices, where the transform matrix is configured for transformation of one set of complete orthogonal bases into another set of complete orthogonal bases.

In an embodiment, the transform matrix at least includes one of a discrete Fourier transform matrix or a discrete fractional Fourier transform matrix.

In an embodiment, the configuration mode of the set of transform matrices includes one of the following: negotiation between the first communication device and the second communication device; or configuration by the second communication device.

In an embodiment, the information transmission method applied to the second communication device also includes sending manner configuration signaling to the first communication device, where the manner configuration signaling is configured for jointly configuring the preprocessing manner, a quantization manner of the channel information, and a feedback manner of the channel information.

In an embodiment, the information transmission method applied to the second communication device also includes receiving channel quantization feedback indication information sent by the first communication device.

In an embodiment, the channel information at least includes one of the following: precoding information; beam selection information; information of a number of layers or rank; measurement reference signal selection information; beam quality information; or measurement reference signal resource or port selection information.

It is to be noted that for explanations of parameters such as the reference signal, the set of preprocessing manners, the first channel measurement result, and the second channel measurement result in the information transmission method applied to the second communication device, see the descriptions of corresponding parameters in the information transmission method applied to the first communication device. The details are not repeated here.

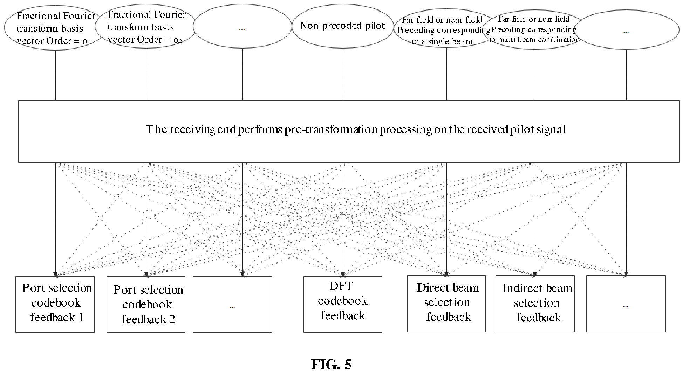

FIG. 5 is a diagram illustrating an implementation of transforming a first channel measurement result according to embodiments of the present application. By way of example, the reference signal may include, but is not limited to, a non-precoded pilot, precoding corresponding to a single beam in a far-field or near-field, and precoding corresponding to a combination of multiple beams in a far-field or near-field; and the quantization and feedback manners of channel information include, but are not limited to, port selection codebook feedback 1, port selection codebook feedback 2, DFT codebook feedback, direct beam selection feedback, and indirect beam selection feedback. As shown in FIG. 5, the first communication device serving as the receiving end performs transformation processing on the first channel measurement result corresponding to the received pilot signal to obtain a second channel measurement result and performs quantization and feedback of the channel information according to the second channel measurement result.

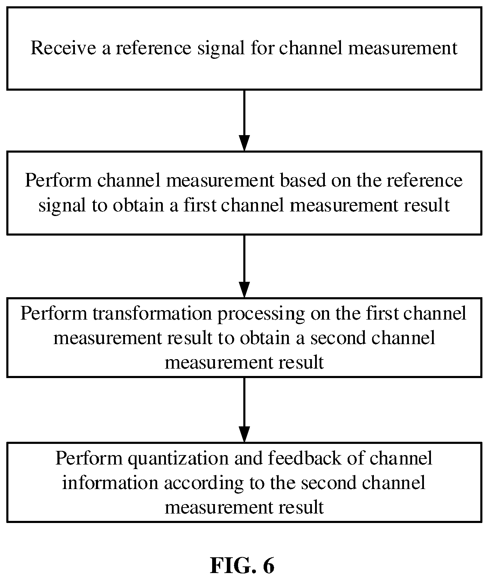

In a first embodiment, a quantization and feedback process of channel information is described using an example in which the first communication device is a terminal and the second communication device is a network (for example, a base station). FIG. 6 is a flowchart of an information transmission method according to embodiments of the present application. As shown in FIG. 6, the information transmission method includes the following steps:

In step 1, a reference signal for channel measurement is received.

In step 2, channel measurement is performed based on the reference signal to obtain a first channel measurement result.

In step 3, transformation processing is performed on the first channel measurement result to obtain a second channel measurement result.

In step 4, quantization and feedback of the channel information is performed according to the second channel measurement result.

The network sends the reference signal for channel measurement. The measurement reference signal may generally include a channel state information reference signal (CSI-RS) and a synchronization signal (SS). In some cases, a demodulation reference signal (DMRS) may also be used for channel measurement.

The terminal measures the reference signal for channel measurement to obtain a corresponding first channel measurement result. The first channel measurement result may be a channel response between receiving antennas and reference signal ports. Since there may be multiple reference signal ports and one or more receiving antennas, the first channel measurement result may be represented as a channel matrix H. If H is a vector, it is also regarded as a matrix. It is to be noted that representing the first channel measurement result by the channel matrix H is a common manner, but not the only manner, and other similar representations may also be regarded as representations of the first channel measurement result.

After obtaining the channel matrix H, the terminal may encounter some problems if directly performing quantization and feedback on H. The main reason is that H measured at this time is a channel representation between receiving antennas and measurement reference signal ports (also often referred to as antenna ports) after physical antennas are virtualized. To ensure flexibility in implementation to cope with various possible conditions and scenarios, the base station device serving as the network does not intend to impose strict constraints on the virtualization from physical antennas to measurement reference signal ports. However, for the terminal, multiple feedback manners are adapted to a certain virtualization manner of measurement reference signal ports.

Theoretically, different users may adopt different virtualization manners of measurement reference signal ports and corresponding measurement feedback manners. However, due to the large number of users, a possible problem is that overhead of measurement reference signals may become very large with an increase in the number of users and enhanced flexibility of virtualization of measurement reference signal ports. Therefore, to enable a large number of users to share the same measurement reference signals and reduce overhead of reference signals, it is necessary to solve an adaptation problem between virtualization (precoding) of measurement reference signal ports and measurement feedback.

Here, a preprocessing manner (also referred to as a receive preprocessing manner) may be used to transform the first channel measurement result. The receive preprocessing manner is to input the first channel measurement result into a receive preprocessing function (also referred to as a preprocessing function) for processing. Preprocessing performed by the receiving end on the first channel measurement result may be linear processing or nonlinear processing. If it is linear processing, it may be a unitary transform or a non-unitary transform; if it is nonlinear processing, it may include operations such as modulo. The preprocessing method is further described in detail in the following embodiments.

The object of preprocessing is generally the first channel measurement result H. In some methods, a transform matrix R may be right-multiplied to the matrix H to transform H into HR, and then quantization and feedback are performed. In some cases, quantization and feedback are performed using a codebook, that is, for the transformed result HR, a codeword w that best matches HR is selected from a codebook B (a set of codewords) so that w is most adapted to HR. In this case, it is equivalent to finding a w such that HRw is optimal. It can be seen that the preprocessing matrix R may be multiplied on the right side of H or may be multiplied on the left side of w, which is equivalent to performing preprocessing transformation on the entire codebook. Therefore, in some cases, these two approaches are actually equivalent in effect.

The preprocessing may be agreed upon between the transmitting end and the receiving end. A preferable manner is that the transmitting end and the receiving end agree on a set of preprocessing manners. The base station selects from the set of preprocessing manners and configures the selected preprocessing manner to the terminal. The terminal may also try each preprocessing manner in the set and select an optimal preprocessing manner to preprocess the first channel measurement result and feed back a corresponding second channel measurement result to the base station.

The preprocessing manners in the set of preprocessing manners may include linear transformation processing on the first channel measurement result, and the transformation type may include, but is not limited to, one or more of a discrete Fourier transform, an inverse discrete Fourier transform, a discrete fractional Fourier transform, an inverse discrete fractional Fourier transform, or linear weighted combining processing. The transformation type may also include, but is not limited to, discrete forms of a wavelet transform, a Wigner transform, a Hilbert transform, a Laplace transform, and a symplectic finite Fourier transform or an inverse thereof.

The terminal performs quantization and feedback of channel information using the transformed second channel measurement result. The feedback manners may include beam selection and codebook feedback. The channel information includes precoding information, beam selection information, information of the number of layers or rank, measurement reference signal selection information, beam quality information, or measurement reference signal resource or port selection information.

In a second embodiment, the quantization and feedback process of channel information is described using an example in which the first communication device is a terminal and the second communication device is a network (for example, a base station).

This embodiment provides some typical preprocessing manners at the receiving end, including manner 1, manner 2, manner 3, and manner 4.

Manner 1: The network serving as the transmitting end sends a non-precoded reference signal, converts to DFT/FRFT beams, and then performs measurement and feedback.

The non-precoded reference signal is a commonly used reference signal. By transmitting pilot signals at different physical antenna ports, a channel H between receiving antennas and transmitting antennas can be measured at the receiving end, that is,
$y = Hs + n$

Here H denotes a channel matrix, s denotes a reference signal, n denotes a noise term, and y denotes a reference signal vector received at the terminal. Since the dimension of H is generally large, preprocessing at the terminal is required to obtain sparse characteristics of H in a certain transform domain, thereby reducing feedback overhead.

A feasible preprocessing manner is to convert the channel H into an angular domain through a discrete Fourier transform (DFT), determine an optimal channel representation according to a receive power distribution in the angular domain, and perform feedback. Specifically, the terminal multiplies a preset discrete Fourier transform matrix with the measured reference signal vector y to obtain
$y ′ = yW$

Here y' may be understood as a representation of channel information in the transform domain. At this time, y' has sparse characteristics, and thus feedback overhead of channel information can be reduced. Generally, a codeword in a preset DFT codebook may be determined according to an index of one or more peak values in y', and finally indication information of the codeword is fed back.

In some cases, a channel between the base station and the terminal has non-stationary characteristics in a spatial domain. For example, when the receiving end is located in a near-field region of the base station, the spatial channel has chirp characteristics. If a traditional Fourier transform is applied to the measured channel, a sparse channel representation cannot be obtained, and thus feedback overhead cannot be effectively reduced. In this case, another feasible preprocessing manner may be adopted, that is, a discrete fractional Fourier transform (DFrFT) is performed on the measured channel H. A p-th order fractional Fourier transform (FrFT) of a function x(t) may be expressed as
${X}_{p} \left(u\right) = {F}_{p} \left[x\right] \left(u\right) = {\int }_{- ∞}^{∞} {K}_{p} \left(t, u\right) x \left(t\right) dt$

Here the transform kernel function Kp is defined as
${K}_{p} \left(t, u\right) = \left\{\begin{matrix}\sqrt{1 - j cot α} {e}^{jπ \left[\left({t}^{2}+{u}^{2}\right)cotα-2utcscα\right]} , & α \neq nπ \\ δ \left(u-t\right) , & α = 2 nπ \\ δ \left(u+t\right) , & α = \left(2n+1\right) π\end{matrix}\right.$

Here n is an integer, and α = pπ/2. When p varies between 0 and 1, it is equivalent to observing x(t) from a perspective at an angle α relative to a time-domain axis; and when p = 1, it corresponds to a perspective of a traditional Fourier transform. Therefore, by adjusting the order p, an observation perspective of the channel can be changed so that a suitable transform domain can be found to obtain a sparse representation of channel information. According to the FrFT form, a corresponding discrete transform form, that is, DFrFT, can be obtained. Commonly used DFrFT can be classified into a sampling type and an eigen-decomposition type, and one of them may be selected according to actual conditions. According to the DFrFT form, a DFrFT transform matrix similar to a DFT matrix may be designed. After W in formula (2) is replaced with the matrix, the received reference signal vector can be mapped to a fractional Fourier transform domain through preprocessing at the terminal, thereby obtaining a representation of channel information in the transform domain.

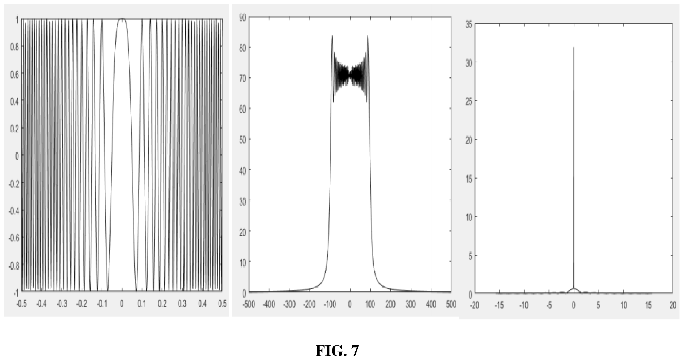

FIG. 7 is a diagram illustrating results of a Fourier transform and a fractional Fourier transform of a non-stationary signal according to embodiments of the present application. In FIG. 7, the left shows a non-stationary signal, the middle shows a result obtained by performing a Fourier transform on the non-stationary signal, and the right shows a result obtained by performing a fractional Fourier transform on the non-stationary signal. As shown in the middle and the right of FIG. 7, a signal with non-stationary characteristics cannot obtain a sparse representation in a Fourier transform domain, whereas a favorable sparse characteristic can be obtained after a fractional Fourier transform is performed. Therefore, when a channel between a transmitting array and a receiving array has spatial-domain non-stationary characteristics, DFrFT may be adopted at the terminal to preprocess a received reference signal so as to obtain an optimal sparse representation, and then feedback to the base station is performed.

It is to be noted that since DFrFT introduces an additional parameter α, channel feedback information obtained from DFrFT may include indication information of the parameter α. In a codebook-based feedback scenario, a codeword index in a preset codebook includes indication information of the parameter α, and the base station may determine, according to feedback information of the terminal, a codeword corresponding to channel information obtained from DFrFT.

Manner 2: The network serving as the transmitting end transmits DFT beams, converts to FRFT beams, and then performs measurement and feedback.

Due to a transmit power limitation of non-precoded pilots, when the distance between the base station and the user is relatively large or a noise level is relatively high, a signal-to-noise ratio may be excessively low, thereby affecting channel estimation. In this case, reference signals with precoding may be used for channel estimation and feedback. In an implementation, a set of DFT precoding vectors w1, w2, ..., wr is used, where wi is a column vector of length Nt, and i = 1, 2, ..., r. Accordingly, the receiving end obtains a received vector of length r:
$y = {HW}_{DFT} s + n$

Here H denotes a channel between the transmitting end and the receiving end, W_{DFT} = [wl, w2, ..., wr], s denotes a reference signal, and n denotes a noise term. The i-th column vector of W_{DFT} may be represented as a Kronecker product of two basis vectors, that is, Wᵢ = uᵢ₁ ⊗ uᵢ₂, where ⊗ denotes a Kronecker product operator, and uᵢ₁ and uᵢ₂ satisfy:
$\begin{matrix}{u}_{i 1} = \left\{\begin{matrix}{\left[1 {e}^{{jθ}_{1}} ⋯ {e}^{j \left({N}_{1}-1\right) {θ}_{1}}\right]}^{T} , & {N}_{1} > 1 , \\ 1 , & {N}_{1} = 1 ,\end{matrix}\right. \\ {u}_{i 2} = \left\{\begin{matrix}{\left[1 {e}^{{jθ}_{2}} ⋯ {e}^{j \left({N}_{2}-1\right) {θ}_{2}}\right]}^{T} , & {N}_{2} > 1 , \\ 1 , & {N}_{2} = 1 .\end{matrix}\right.\end{matrix}$

For the received vector y, preprocessing may be performed before channel information is obtained for feedback.

A feasible preprocessing manner is to perform a fractional Fourier transform to convert received beams into FrFT beams, that is, $y ′ = {yW}_{DFT}^{- 1} {W}_{FrFT}$, where ${W}_{DFT}^{- 1}$ denotes an inverse of a DFT matrix. When **W**_{DFT} is not a square matrix, ${W}_{DFT}^{- 1}$ may be a generalized inverse matrix, and **W**_{FrFT} denotes an FrFT transform matrix. A feasible manner is that the k-th column vector of the FrFT transform matrix Fₚ may be constructed by a Kronecker product of two basis vectors uk1 and uk2, where uk1 and uk2 have the following forms:
${u}_{kl} = \left\{\begin{matrix}{\left[1 {e}^{{jθ}_{kl}^{\left(1\right)}} ⋯ {e}^{{jθ}_{kl}^{\left({N}_{kl}-1\right)}}\right]}^{T} , & {N}_{kl} > 1 , \\ 1 , & {N}_{kl} = 1 ,\end{matrix}\right.$

Here ${θ}_{kl}^{\left(n\right)} = {ξ}_{kl} + {nη}_{kl} + {n}^{2} {ζ}_{kl}$, parameters *ξₖₗ*, *ηₖₗ*, and *ζₖₗ* are preset real-valued constants, j denotes an imaginary unit, *l* ∈ [1, 2], 1 ≤ *n* ≤ *Nₖₗ*, and *N*_{*k*1} * *N*_{*k*2} *= Nₖ.* Alternatively, *W_{FrFT}* may be designed based on a discrete form of a kernel function of a fractional Fourier transform, and different-order approximations may be adopted during design.

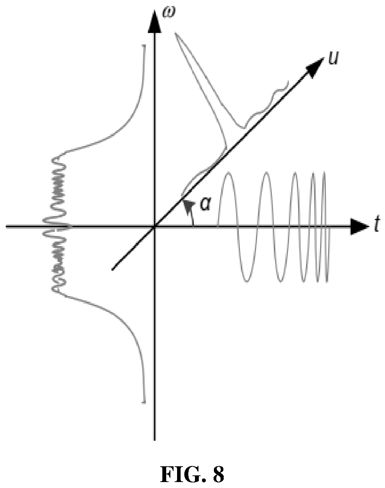

In this manner, the FrFT transform enables sparse representation of channel information. Therefore, when such preprocessing manner is used, channel information can be extracted from the received vector and compressed feedback can be performed. FIG. 8 is a diagram illustrating preprocessing based on a discrete fractional Fourier transform according to embodiments of the present application. As shown in FIG. 8, in some cases, the vector y received at the terminal does not exhibit sparsity in the spatial domain (the curve distributed along ω in the figure); and after a discrete FrFT transform is performed, the obtained y' exhibits a sparse representation in the fractional Fourier transform domain at angle α (the curve distributed along the u-axis in the figure).

Manner 3: The network serving as the transmitting end transmits FRFT beams, converts to DFT beams, and then performs measurement and feedback.

In some communication scenarios, the base station may use precoding defined based on fractional Fourier transform basis vectors for signal transmission. When the signal transmission is performed using reference signals, a set of FrFT beams may be obtained. Compared with far-field beams generated by conventional DFT precoding, FrFT beams have better spatial focusing performance, thereby achieving improved reception gain in certain communication environments. Similarly, after reference signals in the form of FrFT beams transmitted by the base station, the receiving end obtains a received vector y:
$y = {HW}_{FrFT} s + n$

Here *W_{FrFT}* denotes an FrFT precoding matrix, s denotes a reference signal, and n denotes a noise term. The receiving end may perform DFT preprocessing on the received vector to convert FrFT beams into DFT beams, that is,
$y ′ = {yW}_{FrFT}^{- 1} {W}_{DFT}$

Here **W**_{DFT} denotes a Fourier transform matrix. In some communication scenarios, such preprocessing can reduce estimation complexity and feedback overhead without degrading channel estimation accuracy.

Manner 4: The network serving as the receiving end transmits DFT beams, converts to non-precoded reference signals corresponding to an identity matrix I, and then performs measurement and feedback.

In some cases, the base station transmits a set of reference signals in the form of DFT beams. After receiving a reference signal vector, the receiving end may perform another type of preprocessing as follows:
$y ′ = {yW}_{DFT}^{- 1} I$

Here I denotes a diagonal identity matrix. After the preprocessing, the received vector can be transformed into a non-precoded reference signal, and measurement and channel estimation can be performed in this transform domain, followed by feedback. Compared with the centralized preprocessing, this manner has lower computational complexity.

It is to be noted that in the preceding embodiments, the base station may be a single base station or may be a virtual base station formed by cooperation of multiple base stations.

In the preceding embodiments, the terminal can receive a set of reference signals transmitted by the base station, that is, a received vector y. In the measurement and feedback manner provided in the present application, preprocessing may be performed on the received vector y before feedback. The preprocessing may be a preset function or a transform matrix, that is, y' = yW, where W denotes a preset transform matrix. Different preset matrices may be adopted according to different communication scenarios. For example, **W = W***_{DFT}* , $W = {W}_{DFT}^{- 1}$, **W = W***_{FrFT}*, $W = {W}_{FrFT}^{- 1} , W = {W}_{DFT}^{- 1} {W}_{FrFT} , W = {W}_{FrFT}^{- 1} {W}_{DFT} , W = {W}_{DFT}^{- 1} I$.

In a third embodiment, a quantization and feedback process of channel information is described using an example in which the first communication device is a terminal and the second communication device is a network (for example, a base station).

The terminal determines multiple preprocessing matrices to process the first channel measurement result separately.

The receive preprocessing manner is to multiply the first channel measurement result with multiple transform matrices in the transform matrix set.

The transform matrices are used to transform one set of complete orthogonal bases into another set of complete orthogonal bases.

In some communication application scenarios, for the consideration of signaling overhead, when transmitting reference signals, the base station does not inform the terminal of the type of the transmitted reference signals, for example, non-precoded pilot signals or precoded pilot signals. In this case, the terminal needs to select a subset of preprocessing manners from a preset set of preprocessing manners, preprocess the first channel measurement result corresponding to the received reference signal, and performs feedback to the base station according to the second channel measurement result.

In a communication scenario, the terminal presets DFT and DFrFT transforms as a preset set of preprocessing manners. After receiving the reference signal, the terminal uses DFT and DFrFT to preprocess the received vector separately and performs feedback according to the second channel measurement result obtained by preprocessing. Generally, channel information obtained by using different preprocessing manners has different sparsity. Therefore, appropriate channel representation parameters may be determined according to the sparsity of the channel information obtained by multiple preprocessing manners in the transform domain and then fed back. The DFT preprocessing and DFrFT preprocessing may be to multiply the received vector by a DFT transform matrix or a DFrFT transform matrix.

In an embodiment, compared with the DFT transform, the DFrFT transform has one more dimension. Therefore, when DFrFT preprocessing is adopted, the DFrFT transform matrix may actually include a set of transform matrices determined by the kernel function of the FrFT transform. The DFrFT preprocessing requires testing the sparsity of the channel obtained after multiplying each transform matrix with the received vector, so as to determine appropriate channel representation parameters and perform feedback. Since the base station and the terminal do not pre-agree on the type of the reference signal, the preprocessing manner of the terminal is generally not pre-agreed either. Therefore, the terminal needs to include preprocessing manner indication information during feedback so that the base station side can recover the required channel state information according to the preprocessing manner indication information and select appropriate downlink signal precoding.

It can be seen from the kernel function form shown in formula (4) that the set of FrFT transform matrices is related to the parameter α. Therefore, when DFrFT is adopted for preprocessing, the obtained channel representation parameters should include the parameter α, and thus when the terminal performs feedback, the feedback information also needs to include indication information of the parameter α. Since the parameter α is related to the order p of the fractional Fourier transform, α can also be determined by the parameter p. Therefore, the feedback information may include indication information of the order p instead of indication information of the parameter α.

The difference between this embodiment and the second embodiment lies in that the transmitting and receiving ends do not pre-agree on the type of the reference signal and the preprocessing manner. Therefore, the terminal adds a preprocessing manner selection process in the preprocessing process and needs to select an appropriate preprocessing manner from a preset set of preprocessing manners, then transform the first channel measurement result by using the preprocessing manner to obtain a corresponding second channel measurement result, and then perform quantization and feedback of channel information according to the second channel measurement result.

In this embodiment, orthogonal bases corresponding to multiple alpha values of FRFT are used (the transform matrix is a discrete Fourier transform matrix or a discrete fractional Fourier transform matrix).

The terminal selects a preprocessing function from a preprocessing function set, performs transformation on the first channel measurement result by using the selected preprocessing function to obtain a second channel measurement result, performs quantization and feedback based on the second channel measurement result, and feeds back preprocessing function indication information for indicating the selected preprocessing function to the network.

The preprocessing function indication information also indicates an order of a discrete fractional Fourier transform.

In a fourth embodiment, in some communication scenarios, the terminal needs to select a subset of preprocessing functions from a set of preprocessing functions and use the preprocessing functions in the subset to preprocess the received reference signal and perform quantization and feedback.

This embodiment provides a preprocessing manner (for example, Hash beam training) adopted by the receiving end in the case where the transmission beams of the measurement reference signal and the feedback beams are not the same. In this case, the preprocessing manners in the set of preprocessing manner include "linear weighted combining and nonlinear modulus processing". The terminal determines multiple preprocessing functions to process the first channel measurement result, where the preprocessing functions include at least one linear processing function and at least one nonlinear processing function.

The terminal determines multiple preprocessing functions to sequentially process the first channel measurement result. Here the sequential processing refers to using the processing result of the previous function as the input of the subsequent function to obtain a corresponding result.

Manner 1: First nonlinear modulus processing is performed, and then linear weighted combining is performed.

In a communication scenario, the terminal receives multiple reference signals transmitted by the base station. For each reference signal transmitted by the base station, the terminal side first performs a modulus operation and then performs weighted summation. For example, when the base station transmits the m-th reference signal, the signal received at the terminal is:
${y}_{m} = {HW}_{m} s + {n}_{m}$

Here **W**ₘ denotes precoding, s denotes a reference signal, and n denotes a noise term. The terminal performs a modulus operation on each received reference signal, then selects a set of weighting coefficients *Ai* = {*a*_{*i*1},*a*_{*i*2},...,*a_{iN}*} from a weighting coefficient set A, and finally performs weighted summation on the modulus values of the received reference signals, that is,
${p}_{i} = {\sum }_{m = 1}^{N} {a}_{im} \left|{y}_{m}\right|$

The modulus operation may also be replaced by the square of the modulus, that is,
${p}_{i} = {\sum }_{m = 1}^{N} {a}_{im} {\left|{y}_{m}\right|}^{2}$

The weighting coefficient set A may be a preset weighting coefficient matrix. In some scenarios, the sum of each set of weighting coefficients in A is 1; in other scenarios, each group of weighting coefficients in A includes two types of values, 0 and 1, and includes at least one 0 and one 1. In other scenarios, each group of weighting coefficients in A includes three types of values, -1, 0, and 1, and includes at least one 0, one 1, and one -1.

After preprocessing the received reference signal according to formula (11) or (12), the terminal can obtain a set of weighted summation results and then determine channel representation parameters based on the set of weighted summation results. For example, the channel representation parameters may be determined according to one or more maximum values in the weighted summation results, and quantization and feedback are then performed.

It is to be noted that since the channel representation depends on the selection of the weighting coefficients, the feedback indication information should include indication information of the weighting coefficients corresponding to the maximum values.

Manner 2: First linear weighted combining is performed, and then nonlinear modulus processing is performed.

In another communication scenario, the terminal first performs linear weighted combining on the received reference signal and then performs a modulus operation, that is,
${p}_{i} = \left|{\sum }_{m = 1}^{N} {a}_{im} {y}_{m}\right|$
or
${p}_{i} = {\left|{\sum }_{m = 1}^{N} {a}_{im} {y}_{m}\right|}^{2}$

Here **y*ₘ*** denotes the m-th reference signal received at the terminal, and *aᵢₘ* denotes the m-th weight value in the i-th set of weighting coefficients in a preset weighting coefficient matrix. In some application scenarios, each element in the weighting coefficient matrix may be 0 or 1. In some other scenarios, each set of weighting coefficients in the weighting coefficient matrix includes two types of values, 0 and 1, and includes at least one 0 and one 1. In some other scenarios, each set of weighting coefficients in the weighting coefficient matrix includes three types of values, -1, 0, and 1, and includes at least one 0, one 1, and one -1. In some other scenarios, each element of the weighting coefficient matrix is a unit complex vector. For example, the m-th coefficient in the i-th set of weighting coefficients may be expressed as *aᵢₘ* = *αᵢₘe^{jθᵢₘ}*, where αᵢₘ denotes a preset magnitude, and θᵢₘ denotes a preset phase.

Similarly, the terminal may determine channel representation parameters according to the weighted summation results after preprocessing and feed back indication information of the channel representation parameters to the base station.

In the preceding preprocessing manner, the processing of the received reference signal at the terminal may be divided into multiple steps, and the result of the previous step serves as the input of the subsequent step. In addition, the preceding preprocessing manner at least includes one linear processing function and nonlinear processing function.

In a sixth embodiment, reduce pilot overhead, the base station generally transmits a limited number of reference signals, for example, reference signal beams having the same dimension as the base station antenna array. The terminal may perform oversampling on the received pilot signals through preprocessing, thereby obtaining finer channel state information for feedback.

Specifically, the base station transmits N1 reference signals to the terminal, where the i-th reference signal is transmitted via the i-th beam, and the precoding corresponding to this beam is *Wᵢ* . Then, the reference signal vector received at the terminal may be expressed as:
$y = HWs + n$

Here *y* = [*y*₁,*y*₂,...,*y*_{*N*1}], *W* = [*W*₁,*W*₂,...,*W*_{*N*1}], s denotes a reference signal, and n denotes a noise term. The terminal may preprocess the received vector as follows:
$y ′ = {yW}^{- 1} {W}_{o}$

Here **W**⁻¹ denotes an inverse matrix or a generalized inverse matrix of W. **W*ₒ*** denotes an oversampling transform matrix including N2 column vectors, and N2 is greater than N1. In some cases, the following may be preset: N2 = 2*N1, or N2 = 4*N1, or N2 = 8*N1. N2 may be determined according to application scenarios or configured by the base station via signaling.

After adopting the preprocessing manner shown in formula (17), the terminal can change the dimension of the received reference signal from N1 to N2, thereby achieving oversampling and obtaining finer channel state information. W and Wo may be constructed by basis functions with specific forms, for example, constructed by the Kronecker product of basis vectors as shown in formula (6) or (7) or constructed by discrete forms of other orthogonal basis functions or orthogonal basis vectors.

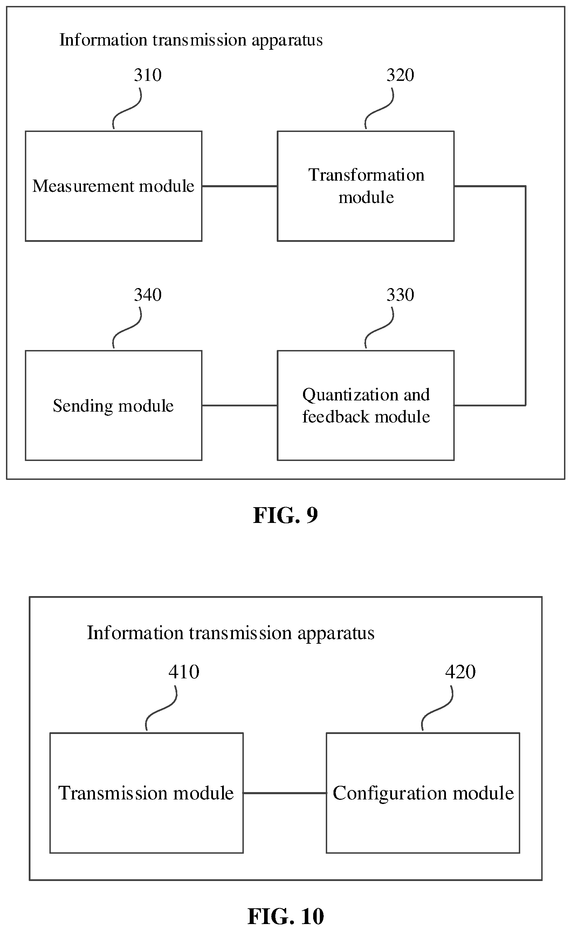

FIG. 9 is a block diagram of an information transmission apparatus according to embodiments of the present application. This embodiment is applied to a first communication device. As shown in FIG. 9, the information transmission apparatus of this embodiment includes a measurement module 310, a transformation module 320, a quantization feedback module 330, and a sending module 340.

The measurement module 310 is configured to perform channel measurement based on a received reference signal to obtain a first channel measurement result. The transformation module 320 is configured to transform the first channel measurement result according to a preprocessing manner to obtain a second channel measurement result. The quantization feedback module 330 is configured to quantize and feed back channel information according to the second channel measurement result. The sending module 340 is configured to send channel quantization feedback indication information to a second communication device.

In an embodiment, the reference signal at least includes one of a channel state information reference signal or a synchronization signal.

In an embodiment, transforming the first channel measurement result according to the preprocessing manner includes receiving at least one preprocessing manner configured by the second communication device and transforming the first channel measurement result according to the at least one preprocessing manner.

In an embodiment, transforming the first channel measurement result according to the preprocessing manner includes receiving a set of preprocessing manners configured by the second communication device or agreeing on a set of preprocessing manners with the second communication device; and selecting at least one preprocessing manner from the set of preprocessing manners and transforming the first channel measurement result according to the at least one preprocessing manner.

In an embodiment, the information transmission apparatus applied to the first communication device also includes a feedback module configured to feed back preprocessing manner indication information to the second communication device, where the preprocessing manner indication information indicates at least one preprocessing manner selected by the first communication device from the set of preprocessing manners.

In an embodiment, transforming the first channel measurement result according to the preprocessing manner includes inputting the first channel measurement result into a preprocessing function for transformation.

In an embodiment, inputting the first channel measurement result into the preprocessing function for transformation includes transforming the first channel measurement result using at least two preprocessing functions separately.

In an embodiment, inputting the first channel measurement result into the preprocessing function for transformation includes transforming the first channel measurement result using at least two preprocessing functions sequentially, where the sequential transformation includes using a transformation result of the previous preprocessing function of the at least two preprocessing functions on the first channel measurement result as an input of the subsequent preprocessing function of the at least two preprocessing functions.

In an embodiment, inputting the first channel measurement result into the preprocessing function for transformation includes transforming the first channel measurement result using at least one linear processing function and at least one nonlinear processing function.

In an embodiment, inputting the first channel measurement result into the preprocessing function for transformation includes selecting at least one preprocessing function from a set of preprocessing functions and transforming the first channel measurement result according to the at least one preprocessing function.

In an embodiment, the information transmission apparatus applied to the first communication device also includes a feedback module configured to feed back preprocessing function indication information to the second communication device, where the preprocessing function indication information indicates the at least one preprocessing function selected by the first communication device from the set of preprocessing functions.

In an embodiment, the preprocessing function indication information also indicates an order of a discrete fractional Fourier transform.

In an embodiment, transforming the first channel measurement result according to the preprocessing manner includes performing linear transformation on the first channel measurement result using a transform matrix from a set of transform matrices, where the transform matrix is configured for transformation of one set of complete orthogonal bases into another set of complete orthogonal bases.

In an embodiment, the transform matrix at least includes one of a discrete Fourier transform matrix or a discrete fractional Fourier transform matrix.

In an embodiment, the configuration mode of the set of transform matrices includes one of the following: negotiation between the first communication device and the second communication device; or configuration by the second communication device. In an example, the set of transform matrices may be predetermined through negotiation between the first communication device and the second communication device; alternatively, the set of transform matrices may be configured by the second communication device and transmitted to the first communication device via signaling.

In an embodiment, the channel information at least includes one of the following: precoding information; beam selection information; information of a number of layers or rank; measurement reference signal selection information; beam quality information; or measurement reference signal resource or port selection information.

In an embodiment, the information transmission apparatus applied to the first communication device also includes a receiving module configured to receive manner configuration signaling sent by the second communication device and jointly determine the preprocessing manner, a quantization manner of the channel information, and a feedback manner of the channel information according to the manner configuration signaling. The first communication device may jointly determine the preprocessing manner, the quantization manner of the channel information, and the feedback manner of the channel information according to the manner configuration signaling.

In an embodiment, the preprocessing manner in the set of preprocessing manners includes a unitary transform processing manner.

In an embodiment, a transformation type for transforming the first channel measurement result at least includes one of the following: a discrete Fourier transform; an inverse discrete Fourier transform; a discrete fractional Fourier transform; an inverse discrete fractional Fourier transform; linear weighted combining processing; or nonlinear modulo processing.

In an embodiment, the preprocessing manner in the set of preprocessing manners includes linear weighted combining processing and nonlinear modulo processing.

In an embodiment, a transformation type for transforming the first channel measurement result at least includes one of the following: a wavelet transform; a Wigner transform; a Hilbert transform; a Laplace transform; a symplectic finite Fourier transform; or an inverse symplectic finite Fourier transform.

The information transmission apparatus of this embodiment is configured to perform the information transmission method applied by the first communication device according to the embodiment shown in FIG. 3. The implementation principles and technical effects of the information transmission apparatus of this embodiment are similar to those of the information transmission method applied by the first communication device according to the embodiment shown in FIG. 3 and thus are not described again here.

FIG. 10 is a block diagram of an information transmission apparatus according to embodiments of the present application. This embodiment is applied to a second communication device. As shown in FIG. 10, the information transmission apparatus of this embodiment includes a sending module 410 and a configuration module 420.

The sending module 410 is configured to send a reference signal to a first communication device to enable the first communication device to perform channel measurement based on the reference signal to obtain a first channel measurement result. The configuration module 420 is configured to configure a set of preprocessing manners corresponding to the first channel measurement result to enable the first communication device to transform the first channel measurement result according to a preprocessing manner in the set of preprocessing manners to obtain a second channel measurement result and quantize and feed back channel information according to the second channel measurement result.

In an embodiment, the reference signal at least includes one of a channel state information reference signal or a synchronization signal.

In an embodiment, the information transmission apparatus applied to the second communication device also includes a sending module 410 that is also configured to send a set of preprocessing manners to the first communication device to enable the first communication device to select at least one preprocessing manner from the set of preprocessing manners and transform the first channel measurement result according to the at least one preprocessing manner.

In an embodiment, the information transmission apparatus applied to the second communication device also includes a receiving module configured to receive preprocessing manner indication information fed back by the first communication device, where the preprocessing manner indication information indicates the at least one preprocessing manner selected by the first communication device from the set of preprocessing manners.

In an embodiment, the preprocessing manner in the set of preprocessing manners includes a unitary transform processing manner.

In an embodiment, a transformation type for transforming the first channel measurement result at least includes one of the following: a discrete Fourier transform; an inverse discrete Fourier transform; a discrete fractional Fourier transform; an inverse discrete fractional Fourier transform; linear weighted combining processing; or nonlinear modulo processing.

In an embodiment, the preprocessing manner in the set of preprocessing manners includes linear weighted combining processing and nonlinear modulo processing.

In an embodiment, a transformation type for transforming the first channel measurement result at least includes one of the following: a wavelet transform; a Wigner transform; a Hilbert transform; a Laplace transform; a symplectic finite Fourier transform; or an inverse symplectic finite Fourier transform.

In an embodiment, transforming the first channel measurement result according to the preprocessing manner includes performing linear transformation on the first channel measurement result using a transform matrix from a set of transform matrices, where the transform matrix is configured for transformation of one set of complete orthogonal bases into another set of complete orthogonal bases.

In an embodiment, the transform matrix at least includes one of a discrete Fourier transform matrix or a discrete fractional Fourier transform matrix.

In an embodiment, the configuration mode of the set of transform matrices at least includes one of the following: negotiation between the first communication device and the second communication device; or configuration by the second communication device.

In an embodiment, the information transmission apparatus applied to the second communication device also includes a sending module 410 that is also configured to send manner configuration signaling to the first communication device, where the manner configuration signaling is configured for joint configuration of the preprocessing manner, a quantization manner of the channel information, and a feedback manner of the channel information.

In an embodiment, the information transmission apparatus applied to the second communication device also includes a receiving module that is also configured to receive channel quantization feedback indication information sent by the first communication device.

In an embodiment, the channel information at least includes one of the following: precoding information; beam selection information; information of a number of layers or rank; measurement reference signal selection information; beam quality information; or measurement reference signal resource or port selection information.

The information transmission apparatus of this embodiment is configured to perform the information transmission method applied by the second communication device according to the embodiment shown in FIG. 4. The implementation principles and technical effects of the information transmission apparatus of this embodiment are similar to those of the information transmission method applied by the second communication device according to the embodiment shown in FIG. 4 and thus are not described again here.

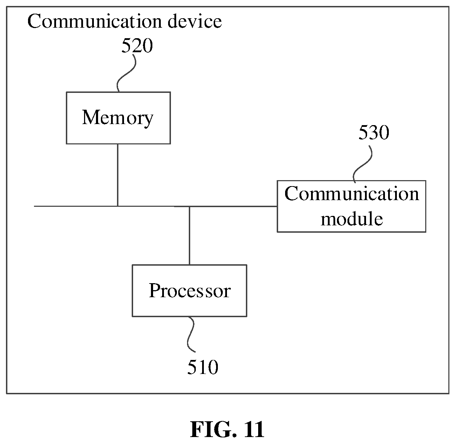

In an embodiment, FIG. 11 is a diagram illustrating the structure of a communication device according to embodiments of the present application. As shown in FIG. 11, the communication device of the present application includes a processor 510, a memory 520, and a communication module 530. One or more processors 510 may be provided in the device. FIG. 11 shows one processor 510 as an example. One or more memories 520 may be provided in the device. FIG. 11 shows one memory 520 as an example. The processor 510, the memory 520, and the communication module 530 of the device may be connected by a bus or otherwise. FIG. 11 uses connection by a bus as an example. In this embodiment, the device may be a first communication device or a second communication device.

As a computer-readable storage medium, the memory 520 may be configured to store software programs and computer-executable programs and modules, such as program instructions/modules (for example, the measurement module 310, the transformation module 320, and the quantization feedback module 330 in the information transmission apparatus applied to the first communication device) corresponding to the device according to any embodiment of the present application. The memory 520 may include a program storage region and a data storage region. The program storage region may store an operating system and an application program required by at least one function. The data storage region may store data created according to the use of the device. Additionally, the memory 520 may include a high-speed random-access memory and may also include a nonvolatile memory such as at least one disk memory, a flash memory, or another nonvolatile solid-state memory. In some examples, the memory 520 may be remote relative to the processor 510 and connectable to the device via a network. Examples of the network include, but are not limited to, the Internet, an intranet, a local area network, a mobile communication network, and a combination thereof.

In the case where the communication device is the first communication device, the device may be configured to perform the information transmission method applied to the first communication device according to any previous embodiment and has corresponding functions and effects.

In the case where the communication device is the second communication device, the device may be configured to perform the information transmission method applied to the second communication device according to any previous embodiment and has corresponding functions and effects.

Embodiments of the present application also provide a storage medium including computer-executable instructions. The computer-executable instructions are configured to, when executed by a computer processor, cause the computer processor to perform an information transmission method applied to a first communication device. The information transmission method applied to the first communication device includes performing channel measurement based on a received reference signal to obtain a first channel measurement result; transforming the first channel measurement result according to a preprocessing manner to obtain a second channel measurement result; and quantizing and feeding back channel information according to the second channel measurement result.

Embodiments of the present application also provide a storage medium including computer-executable instructions. The computer-executable instructions are configured to, when executed by a computer processor, cause the computer processor to perform an information transmission method applied to a second communication device. The information transmission method applied to the second communication device includes sending a reference signal to a first communication device to enable the first communication device to perform channel measurement based on the reference signal to obtain a first channel measurement result; and configuring a set of preprocessing manners corresponding to the first channel measurement result to enable the first communication device to transform the first channel measurement result according to a preprocessing manner in the set of preprocessing manners to obtain a second channel measurement result and quantize and feed back channel information according to the second channel measurement result.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

Preferred embodiments of the present application are described above, which are not intended to limit the present application. Those skilled in the art may make various modifications and variations to the present application. Any modifications, equivalent substitutions, and improvements made within the spirit and principle of the present application are within the scope of the present application.

## Claims

1. An information transmission method, applied to a first communication device, comprising:
performing channel measurement based on a received reference signal to obtain a first channel measurement result;
transforming the first channel measurement result according to a preprocessing manner to obtain a second channel measurement result;
quantizing and feeding back channel information according to the second channel measurement result; and
sending channel quantization feedback indication information to a second communication device.

2. The method of claim 1, wherein transforming the first channel measurement result according to the preprocessing manner comprises:
receiving at least one preprocessing manner configured by the second communication device and transforming the first channel measurement result according to the at least one preprocessing manner.

3. The method of claim 1, wherein transforming the first channel measurement result according to the preprocessing manner comprises:
receiving a set of preprocessing manners configured by the second communication device or agreeing on a set of preprocessing manners with the second communication device; and
selecting at least one preprocessing manner from the set of preprocessing manners and transforming the first channel measurement result according to the at least one preprocessing manner.

4. The method of claim 3, further comprising:
feeding back preprocessing manner indication information to the second communication device, wherein the preprocessing manner indication information indicates the at least one preprocessing manner selected by the first communication device from the set of preprocessing manners.

5. The method of claim 1, wherein transforming the first channel measurement result according to the preprocessing manner comprises:
inputting the first channel measurement result into a preprocessing function for transformation.

6. The method of claim 5, wherein inputting the first channel measurement result into the preprocessing function for transformation comprises:
transforming the first channel measurement result using at least two preprocessing functions separately.

7. The method of claim 5, wherein inputting the first channel measurement result into the preprocessing function for transformation comprises:
transforming the first channel measurement result using at least two preprocessing functions sequentially, wherein the sequential transformation comprises using a transformation result of a previous preprocessing function of the at least two preprocessing functions on the first channel measurement result as an input of a subsequent preprocessing function of the at least two preprocessing functions.

8. The method of claim 5, wherein inputting the first channel measurement result into the preprocessing function for transformation comprises:
transforming the first channel measurement result using at least one linear processing function and at least one nonlinear processing function.

9. The method of claim 5, wherein inputting the first channel measurement result into the preprocessing function for transformation comprises:
selecting at least one preprocessing function from a set of preprocessing functions and transforming the first channel measurement result according to the at least one preprocessing function.

10. The method of claim 9, further comprising:
feeding back preprocessing function indication information to the second communication device, wherein the preprocessing function indication information indicates the at least one preprocessing function selected by the first communication device from the set of preprocessing functions.

11. The method of claim 9, wherein the preprocessing function indication information further indicates an order of a discrete fractional Fourier transform.

12. The method of claim 1, wherein transforming the first channel measurement result according to the preprocessing manner comprises:
performing linear transformation on the first channel measurement result using a transform matrix from a set of transform matrices, wherein the transform matrix is configured for transformation of one set of complete orthogonal bases into another set of complete orthogonal bases.

13. The method of claim 12, wherein the transform matrix at least comprises one of a discrete Fourier transform matrix or a discrete fractional Fourier transform matrix.

14. The method of claim 1, wherein the channel information at least comprises one of the following:
precoding information; beam selection information; information of a number of layers or rank; measurement reference signal selection information; beam quality information; or measurement reference signal resource or port selection information.

15. The method of claim 1, further comprising:
receiving manner configuration signaling sent by the second communication device; and
jointly determining the preprocessing manner, a quantization manner of the channel information, and a feedback manner of the channel information according to the manner configuration signaling.

16. An information transmission method, applied to a second communication device, comprising:
sending a reference signal to a first communication device to enable the first communication device to perform channel measurement based on the reference signal to obtain a first channel measurement result; and
configuring a set of preprocessing manners corresponding to the first channel measurement result to enable the first communication device to transform the first channel measurement result according to a preprocessing manner in the set of preprocessing manners to obtain a second channel measurement result and quantize and feed back channel information according to the second channel measurement result.

17. The method of claim 16, wherein the preprocessing manner in the set of preprocessing manners comprises a unitary transform processing manner.

18. The method of claim 16, wherein a transformation type for transforming the first channel measurement result at least comprises one of the following:
a discrete Fourier transform; an inverse discrete Fourier transform; a discrete fractional Fourier transform; an inverse discrete fractional Fourier transform; linear weighted combining processing; or nonlinear modulo processing.

19. The method of claim 16, wherein the preprocessing manner in the set of preprocessing manners comprises linear weighted combining processing and nonlinear modulo processing.

20. The method of claim 16, wherein a transformation type for transforming the first channel measurement result at least comprises one of the following:
a wavelet transform; a Wigner transform; a Hilbert transform; a Laplace transform; a symplectic finite Fourier transform; or an inverse symplectic finite Fourier transform.

21. The method of claim 16, wherein transforming the first channel measurement result according to the preprocessing manner comprises:
performing linear transformation on the first channel measurement result using a transform matrix from a set of transform matrices, wherein the transform matrix is configured for transformation of one set of complete orthogonal bases into another set of complete orthogonal bases.

22. The method of claim 20, wherein a configuration mode of the set of transform matrices at least comprises one of the following:
negotiation between the first communication device and the second communication device; or configuration by the second communication device.

23. The method of claim 16, further comprising:
sending manner configuration signaling to the first communication device, wherein the manner configuration signaling is configured for jointly configuring the preprocessing manner, a quantization manner of the channel information, and a feedback manner of the channel information.

24. The method of claim 16, further comprising:
receiving channel quantization feedback indication information sent by the first communication device.

25. The method of claim 16, wherein the channel information at least comprises one of the following:
precoding information; beam selection information; information of a number of layers or rank; measurement reference signal selection information; beam quality information; or measurement reference signal resource or port selection information.

26. A communication device, comprising: a memory and at least one processor, wherein
the memory is configured to store at least one program; and
the at least one processor is configured to perform the method of any one of claims 1 to 15 or the method of any one of claims 16 to 25 when executing the at least one program.

27. A storage medium for storing a computer program which, when executed by a processor, causes the processor to perform the method of any one of claims 1 to 15 or the method of any one of claims 16 to 25.
